(19)

**Europäisches Patentamt**

**European Patent Office**

**Office européen des brevets**

(11) **EP 1 275 706 A1**

(12) **EUROPEAN PATENT APPLICATION**

(43) Date of publication:
**15.01.2003 Bulletin 2003/03**

(51) Int Cl.[7]: **C09J 4/00**, C08F 220/18, C09J 7/02

(21) Application number: **02014366.5**

(22) Date of filing: **27.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **02.07.2001 JP 2001200603**

(71) Applicant: **NITTO DENKO CORPORATION**
**Osaka (JP)**

(72) Inventors:
- **Sakaitani, Waka**
  **Ibaraki-shi, Osaka (JP)**
- **Kishioka, Hiroaki**
  **Ibaraki-shi, Osaka (JP)**
- **Umemoto, Seiji**
  **Ibaraki-shi, Osaka (JP)**

(74) Representative: **Grünecker, Kinkeldey,**
**Stockmair & Schwanhäusser Anwaltssozietät**
**Maximilianstrasse 58**
**80538 München (DE)**

(54) **Pressure-sensitive adhesive, pressure-sensitive adhesive member and display unit**

(57) An acrylic pressure-sensitive adhesive which gives a pressure-sensitive adhesive layer having a regulate refractive index, in particular, an increased refractive index, and retaining almost intact satisfactory pressure-sensitive adhesive properties. The pressure-sensitive adhesive comprises an acrylic copolymer comprising, as copolymerizable components, an acrylic alkyl ester containing no aromatic ring and a monomer containing an aromatic ring, copolymerization proportion of the monomer containing an aromatic ring in the copolymer being from 40 to 90% by weight based on the weight of all monomer components.



Printed by Jouve, 75001 PARIS (FR)

## Description

### FIELD OF THE INVENTION

The present invention relates to a pressure-sensitive adhesive capable of having a regulated refractive index. The present invention further relates to a pressure-sensitive adhesive member and a display unit each using the pressure-sensitive adhesive.

### DESCRIPTION OF THE RELATED ART

A method used in fabricating a display unit such as a liquid crystal display is to bond various optical members serving as components of the display, e.g., a polarizing film and a retardation film, to an adherend such as a liquid crystal cell through an adhesive layer. The adhesive layer frequently used is an acrylic pressure-sensitive adhesive layer from the standpoints of ease of bonding operation, heat resistance, weatherability, etc. On the other hand, in bonding optical members, there is a desire for the diminution of interfacial reflection due to a difference in refractive index between the optical members and the adherend from the standpoints of effective utilization of light, etc. It is known that use of an adhesive layer having an intermediate refractive index between that of the optical members and that of the adherend is advantageous. As the difference in refractive index at an interface increases, total reflection comes to occur at a smaller angle of incidence, leading to a decrease in the degree of effective utilization of light.

However, general acrylic pressure-sensitive adhesive layers have a refractive index of around 1.47, while materials constituting optical members have refractive indexes considerably different from that value. For example, the refractive indexes of glasses are around 1.52, those of methacrylic resins are around 1.51, and those of polycarbonates are around 1.54. In addition, when such a general acrylic pressure-sensitive adhesive is used for, for example, bonding an optical member made of a glass to an optical member made of a methacrylic resin or polycarbonate, the desired adhesive layer having an intermediate refractive index cannot be attained.

### SUMMARY OF THE INVENTION

One object of the present invention is to provide a pressure-sensitive adhesive which gives a pressure-sensitive adhesive layer having a regulate refractive index, in particular, an increased refractive index, and retaining almost intact satisfactory acrylic pressure-sensitive adhesive properties.

Another object of the present invention is to provide a pressure-sensitive adhesive member using the pressure-sensitive adhesive.

Still another object of the present invention is to provide a display unit using the pressure-sensitive adhesive member.

The present invention provides a pressure-sensitive adhesive comprising an acrylic copolymer comprising, as copolymerizable components, an acrylic alkyl ester containing no aromatic ring and a monomer containing an aromatic ring, copolymerization proportion of the monomer containing an aromatic ring in the copolymer being from 40 to 90% by weight based on the weight of all monomer components.

The present invention further provides a pressure-sensitive adhesive member comprising a supporting substrate and a pressure-sensitive adhesive layer comprising the pressure-sensitive adhesive, formed on one or both sides of the supporting substrate.

The present invention also provides a display unit comprising an optical member adhered to an adherent through a pressure-sensitive adhesive layer comprising the pressure-sensitive adhesive.

According to the present invention, an acrylic pressure-sensitive adhesive layer suitable for optical uses can be formed which has a refractive index changed, in particular, increased to 1.5 or higher, through modification by copolymerization of a monomer containing an aromatic ring. This pressure-sensitive adhesive layer further has excellent pressure-sensitive adhesive properties.

### DETAILED DESCRIPTION FO THE INVENTION

The pressure-sensitive adhesive according to the present invention is an acrylic pressure-sensitive adhesive comprising an acrylic copolymer comprising, as copolymerizable components, an acrylic alkyl ester containing no aromatic ring and a monomer containing an aromatic ring, wherein copolymerization proportion of the monomer containing an aromatic ring in the copolymer is from 40 to 90% by weight based on the weight of all monomer components.

The acrylic alkyl ester having no aromatic ring is not particularly limited, and acrylic, methacrylic or similar esters having an appropriate alkyl group containing no aromatic ring, such as those for use in producing acrylic pressure-sensitive adhesives of the related art, can be used. Examples of the acrylic alkyl ester used include acrylic and

methacrylic esters having an alkyl group having 1 to 18 carbon atoms and containing no aromatic ring. Examples of the alkyl group includes methyl, ethyl, propyl, isopropyl, butyl, isobutyl, amyl, hexyl, heptyl, cyclohexyl, 2-ethylhexyl, isooctyl, nonyl, decyl, isodecyl, dodecyl, lauryl, tridecyl, pentadecyl, hexadecyl, heptadecyl and octadecyl. Those acrylic alkyl esters can be used alone or in combination of two or more thereof.

The monomer containing an aromatic ring used can be one or more appropriate monomers. Preferred examples of the monomer are acrylic or methacrylic esters having an alkyl group having 1 to 10 carbon atoms and containing an aromatic ring, from the standpoint of suitability for regulation of refractive index and pressure-sensitive adhesive properties. Especially preferred example of the monomer is phenoxyethyl acrylate represented by the following chemical formula:

$$CH_2{=}CH\text{-}COO\text{-}CH_2CH_2O\text{-}C_6H_5$$

The acrylic copolymer is obtained by copolymerizing at least the above-described acrylic alkyl ester containing no aromatic ring and monomer containing an aromatic ring. In preparing the acrylic copolymer, one or more modifying monomers may be copolymerized for the purpose of, e.g., regulating cohesive force, heat resistance, pressure-sensitive adhesive properties or crosslinkability, if desired and necessary.

The modifying monomers are not particularly limited, and appropriate monomers such as monomers for use in producing acrylic pressure-sensitive adhesives of the related art can be used. Examples of the modifying monomers used include vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine and N-vinylcarboxamides.

Examples of the modifying monomers further include cyanoacrylate monomers such as (meth)acrylonitrile, and (N-substituted) amide monomers such as (meth)acrylamide, N,N-dimethyl(meth)acrylamide, N-butyl(meth)acrylamide, N-methylol(meth)acrylamide and N-methylolpropane(meth)acrylamide. The term "(meth)" means include both acrylic and methacrylic acid compounds. For example, (meth)acrylonitrile means to include acrylonitrile and methacrylonitrile. (The same applies hereinafter.)

Examples of the modifying monomers further include hydroxyl-containing monomers such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate and (4-hydroxymethylcyclohexyl)methyl acrylate.

Examples of the modifying monomers further include epoxy-containing acrylic monomers such as glycidyl (meth)acrylate; glycol acrylate monomers such as polyethylene glycol (meth)acrylate, polypropylene glycol (meth) acrylate, methoxyethylene glycol (meth)acrylate and methoxypolypropylene glycol (meth)acrylate; and acrylic ester monomers such as tetrahydrofurfuryl (meth)acrylate, fluoro(meth)acrylates, silicone (meth)acrylates and 2-methoxyethyl acrylate.

Examples of the modifying monomers further include polyfunctional monomers such as hexanediol di(meth) acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylates, polyester acrylates and urethane acrylates; isoprene; butadiene; polyisobutylene; and vinyl ether.

Examples of the modifying monomers further include aminoethyl (meth)acrylate, alkylaminoalkyl (meth)acrylate monomers such as N,N-dimethylaminoethyl (meth)acrylate and t-butylaminoethyl (meth)acrylate, alkoxyalkyl (meth)acrylate monomers such as methoxyethyl (meth)acrylate and ethoxyethyl (meth)acrylate, and carboxyl-containing monomers such as (meth)acrylic acid, crotonic acid, itaconic acid, maleic acid and fumaric acid.

Of the above modifying monomers, the monomers having one or more functional or polar groups, such as the hydroxyl-containing monomers and carboxyl-containing monomers, are preferably used in that those monomers can be used in crosslinking the acrylic copolymer. Of the carboxyl-containing monomers, acrylic acid is particularly preferable.

The acrylic copolymer can be obtained by copolymerizing the acrylic alkyl ester containing no aromatic ring and the monomer containing an aromatic ring optionally together with the modifying monomer. The polymerization method is not particularly limited, and any appropriate technique conventionally used for polymerization method of vinyl monomers can be employed. Examples of the polymerization method that can be employed include solution polymerization, emulsion polymerization and bulk polymerization methods using a polymerization initiator such as an

azo compound or a peroxide, and polymerization method in which a reaction mixture containing a photoinitiator is irradiated with radiations such as ultraviolet rays or electron beams.

Examples of the polymerization initiator include 2,2'-azobisisobutyronitrile (AIBN), 2,2'-azobis-2-methylbutyronitrile, dimethyl 2,2'-azobis(2-methylpropionate), 4,4'-azobis(4-cyanovalerianic acid) and dibenzoyl peroxide. The amount of the polymerization initiator used is generally from 0.01 to 2 mol%, preferably from 0.02 to 1 mol%, per mole of all monomers, but is not limited to this range.

In preparing the acrylic copolymer, the monomer containing an aromatic ring is used in an amount of from 40 to 90% by weight based on the weight of all monomer components. Namely, the acrylic copolymer contains the aromatic ring-containing monomer in an amount of from 40 to 90% by weight. Due to this structure of the copolymer, a pressure-sensitive adhesive capable of forming a pressure-sensitive adhesive layer having a refractive index of from 1.50 to 1.55 can be obtained. The refractive index of the pressure-sensitive adhesive layer formed can be changed by changing the copolymerization proportion of the monomer containing an aromatic ring,

The copolymerization proportion of the monomer containing an aromatic ring is preferably from 42 to 85% by weigh, more preferably from 45 to 80% by weight, from the standpoint of balancing refractive index with pressure-sensitive adhesive properties. The copolymerization proportion of the modifying monomers as an optional component is generally from 0 to 20% by weight, preferably 10% by weight or lower, more preferably 5% by weight or lower, but is not limited to this range.

The pressure-sensitive adhesive can be obtained in a form according to conventional acrylic pressure-sensitive adhesives containing one or more acrylic copolymers as a base polymer. For example, the pressure-sensitive adhesive of the present invention can be obtained in a form of a solution or a dispersion. Consequently, in the case where the acrylic copolymer is a type produced through polymerization with irradiation with light or radiation, the pressure-sensitive adhesive can be used in a form of its liquid monomer mixture.

The pressure-sensitive adhesive is preferably prepared such that the acrylic copolymer can be crosslinked. Crosslinking can improve releasability from a separator (release liner), pressure-sensitive adhesive properties, durability including heat resistance, and other properties. Crosslinking treatment that can be used is an appropriate technique applied to conventional acrylic pressure-sensitive adhesives. A technique generally employed is to incorporate a crosslinking agent into the pressure-sensitive adhesive. The crosslinking agent that can be used is appropriate compound used in conventional acrylic pressure-sensitive adhesives. Examples of the crosslinking agent include polyisocyanate compounds, epoxy compounds, aziridine compounds, metal chelate compounds and melamine compounds. Those crosslinking agents can be used alone or as mixtures of two or more thereof.

Besides the crosslinking agent, suitable compounding ingredients such as those for use in conventional acrylic pressure-sensitive adhesives can be added in preparing the pressure-sensitive adhesive of the present invention, if required and necessary. Examples of the compounding ingredients include tackifiers such as rosin resins, terpene resins, petroleum resins and styrene resins; fillers such as powdery silica; plasticizers; colorants; ultraviolet absorbers; and antioxidants.

The pressure-sensitive adhesive can be used in an appropriate manner as in the related art. It may be used for a pressure-sensitive adhesive member. A pressure-sensitive adhesive member comprises a substrate and a pressure-sensitive adhesive layer comprising a pressure-sensitive adhesive, formed on one or both sides of the substrate. In this pressure-sensitive adhesive member, the pressure-sensitive adhesive layer can be formed so as to be easily peelable from the substrate (peelable type) or can be of a fixed type strongly adhered to the substrate. In the case where a pressure-sensitive adhesive layer is formed on both sides of a substrate, the respective pressure-sensitive adhesive layers on the front and back sides of the substrate may be different as in the case of, for example, a combination of pressure-sensitive adhesive layers having different refractive index, or may be the same. Furthermore, this pressure-sensitive adhesive member may have a structure such that one of the two pressure-sensitive adhesive layers is the pressure-sensitive adhesive layer according to the present invention and the other is a pressure-sensitive adhesive layer comprising a pressure-sensitive adhesive outside the scope of the present invention.

The substrate is not particularly limited and any appropriate substrate may be used. Examples of the substrate include optical members on which a pressure-sensitive adhesive layer may be formed, such as polarizing films, retardation films, reflectors and liquid-crystal cells, separators, films and sheets made of various plastics, papers, fabrics, non-woven fabrics, metal foils, nets, foams, and laminates of two or more of those. The substrate has a thickness of generally from 1 μm to 5 mm, preferably from 5 μm to 2 mm, more preferably from 10 μm to 1 mm.

The peelable-type pressure-sensitive adhesive member can be produced using, for example, a substrate having low adhesive strength (separator). The substrate having low adhesive strength can be obtained by conventional technique such as a method in which a release agent represented by, for example, silicone-type, fluorine-type or long-chain alkyl-type release agents is applied, or a method of using a substrate having low adhesive strength comprising a non-polar polymer such as polyethylene or polypropylene.

Especially preferred separators (release liners) are polyolefin films comprising polyethylene, polypropylene, an ethylene/propylene copolymer (block or random copolymer), a mixture of two or more thereof, or the like and separators obtained by coating laminates of such a polyolefin film and a paper or another kind of film with a silicone release agent. The peelable-type pressure-sensitive adhesive member can be used in a manner such that the pressure-sensitive adhesive layer is separated from the substrate and is applied as a substrate-less pressure-sensitive adhesive sheet to another adherend.

On the other hand, the fixed-type pressure-sensitive adhesive member can be produced using, for example, an optical member or a substrate having high adhesive strength. The substrate having high adhesive strength can be obtained by conventional technique such as a chemical or physical method in which a substrate is subjected to treatment with chromic acid, exposure to ozone, exposure to a flame, exposure to a high-voltage electric shock, treatment with an ionizing radiation, etc., to thereby oxidize the surface of the substrate, or a method of using a highly adherent substrate comprising, for example, a highly polar polymer such as polyester.

The pressure-sensitive adhesive layer can be formed by an appropriate method, for example, a method in which the pressure-sensitive adhesive is applied to a substrate by an appropriate technique such as doctor blade coating or gravure printing, or a method in which a pressure-sensitive adhesive layer is formed on a separator by such a technique and then transferred to a substrate. The thickness of the pressure-sensitive adhesive layer can appropriately be determined according to the intended use, etc., but is generally 500 μm or smaller, preferably from 1 to 300 μm, more preferably from 5 to 100 μm.

The pressure-sensitive adhesive member can also be obtained as a double-faced pressure-sensitive adhesive member comprising a porous substrate such as a paper or a non-woven fabric, and pressure-sensitive adhesive layers supported thereon. Consequently, various types of the pressure-sensitive adhesive member can be obtained as in the conventional. The pressure-sensitive adhesive layer may have a multi-layered structure comprising superposed pressure-sensitive adhesive layers of different kinds for the purpose of, for example, improving pressure-sensitive adhesive properties, or may be one which has undergone an appropriate treatment such as crosslinking by electron beam irradiation for the purpose of, for example, regulating pressure-sensitive adhesive properties. In the case where the surface of the pressure-sensitive adhesive layer in the pressure-sensitive adhesive member is exposed, it is preferred to provisionally apply a separator to the exposed surface to protect the pressure-sensitive adhesive layer against fouling, etc., until the pressure-sensitive adhesive member is put to practical use.

The pressure-sensitive adhesive layer comprising the pressure-sensitive adhesive of the present invention has a higher refractive index than ordinary acrylic pressure-sensitive adhesive layers, and therefore can advantageously be used as a pressure-sensitive adhesive layer for adhering an optical member to an adherend, which is capable of decreasing interfacial reflection between the optical member and the adherend. In particular, the pressure-sensitive adhesive layer is preferably used for fabrication of various display units such as liquid crystal displays which are liable to cause, for example, decrease in contrast due to interfacial reflection.

Those display units each can be fabricated so as to have a multi-layered structure obtained by adhering an optical member serving as a component of the unit to an adherend through a pressure-sensitive adhesive layer comprising the pressure-sensitive adhesive of the present invention.

Unless otherwise indicated, all parts, percents and the like are by weight.

## EXAMPLE 1

49 parts of 2-ethylhexyl acrylate, 50 parts of phenoxyethyl acrylate, 1 part of acrylic acid and 0.2 parts of AIBN were placed together with a solvent in a reactor equipped with a cooling pipe, a nitrogen inlet, a thermometer, a dropping funnel and a stirrer. Nitrogen was circulated through the reactor at room temperature for 1 hour. Under the nitrogen stream, the reaction mixture was heated to 60°C, reacted at this temperature for 4 hours, and then aged at an elevated temperature of 80°C for 2 hours. Thus, a solution of an acrylic copolymer was obtained.

1 part (on a solid basis) of a trimethylolpropane/tolylene diisocyanate adduct (Coronate L, manufactured by Nippon Polyurethane Co., Ltd.) was added as a crosslinking agent to the acrylic copolymer solution to obtain a pressure-sensitive adhesive. This pressure-sensitive adhesive was applied with an applicator to a silicone-treated poly(ethylene terephthalate) film having a thickness of 38 μm. The coating was dried at 130°C for 3 minutes to form a pressure-sensitive adhesive layer having a thickness of 25 μm. A silicone-treated poly(ethylene terephthalate) film having a thickness of 38 μm was adhered on this pressure-sensitive adhesive layer. Thus, a pressure-sensitive adhesive member was obtained.

## EXAMPLE 2

A pressure-sensitive adhesive was obtained in the same manner as in Example 1, except that the amounts of 2-ethylhexyl acrylate and phenoxyethyl acrylate used were changed to 39 parts and 60 parts, respectively. A pressure-sensitive adhesive member was obtained using the pressure-sensitive adhesive in the same manner as in Example 1.

**COMPARATIVE EXAMPLE**

A pressure-sensitive adhesive was obtained in the same manner as in Example 1, except that the amounts of 2-ethylhexyl acrylate and phenoxyethyl acrylate used were changed to 99 parts and 0 part (non-use), respectively. A pressure-sensitive adhesive member was obtained using the pressure-sensitive adhesive in the same manner as in Example 1.

**EVALUATION TEST**

The pressure-sensitive adhesive layer in each of the pressure-sensitive adhesive members obtained in the Examples and Comparative Example was examined for the following properties.

Refractive Index

Refractive index was measured with an Abbe's refractometer while irradiating the pressure-sensitive adhesive layer with sodium D-line in an atmosphere of 25°C.

Angle of Total Reflection, Intensity Ratio of Outgoing Light

A rectangular prism ($n_d$, 1.517) was adhered to a glass substrate ($n_d$, 1.517) through the pressure-sensitive adhesive layer obtained in each of the Examples and Comparative Example. Incident light was struck from an edge of the glass substrate at various angles of incidence, and whether light came out through the pressure-sensitive adhesive layer and the prism was examined. The total amount of the outgoing light was also determined. The angle at which the outgoing light came not to be observed was taken as the angle of total reflection. The intensity ratio of outgoing light was calculated using the equation:

Intensity ratio of outgoing light intensity =

(intensity of outgoing light)/(intensity of incident light) x 100.

In the examination, a single-mode He-Ne laser was used as a light source in a manner such that the direction of polarization made an angle of 45° with the plane of the incidence-side edge. Furthermore, a matching oil prepared beforehand so as to have a refractive index of 1.517 was used to tightly contact the rectangular prism with the glass substrate, and the intensity of an outgoing light coming out through the rectangular prism was measured while varying the angle of the incident laser light. The total amount of this outgoing light was taken as the intensity of incident light.

Adhesive Strength

A pressure-sensitive adhesive member of a strongly adherent type was press-bonded through the pressure-sensitive adhesive layer to a stainless-steel plate by rolling a 2 kg roller forward and backward on the adhesive member. After allowing the test piece thus obtained to stand for 48 hours, it was examined for 180° peel strength with a tensile tester at a peel rate of 300 mm/min.

The results of those examinations are shown in the following Table.

TABLE

| | Refractive index | Angle of total reflection (degree) | Proportion of outgoing light intensity (%) | Adhesive strength (N/ 20 mm) |
|---|---|---|---|---|
| Example 1 | 1.515 | 6.3 | 77 | 5.5 |
| Example 2 | 1.523 | 6.5 | 76 | 5.7 |
| Comparative Example | 1.47 | 12 | 55 | 6.0 |

The following will be apparent from the results shown in the Table. The pressure-sensitive adhesives of the Examples each had almost the same refractive index as that of the optical member adhered, and therefore attained a

small angle of total reflection and a high proportion of outgoing light intensity. Namely, those pressure-sensitive adhesives were effective in decreasing total reflection. Those also had excellent pressure-sensitive adhesive properties. The results further show that changing the proportion of the aromatic ring-containing monomer brought about change in refractive index.

It should further be apparent to those skilled in the art that various changes in form and detail of the invention as shown and described above may be made. It is intended that such changes be included within the spirit and scope of the claims appended hereto.

This application is based on Japanese Patent Application No. 2001-200603 filed July 2, 2001, the disclosure of which is incorporated herein by reference in its entirety.

## Claims

1. A pressure-sensitive adhesive comprising an acrylic copolymer comprising, as copolymerizable components, an acrylic alkyl ester containing no aromatic ring and a monomer containing an aromatic ring, copolymerization proportion of the monomer containing an aromatic ring in the copolymer being from 40 to 90% by weight based on the weight of all monomer components.

2. The pressure-sensitive adhesive as claimed in claim 1, which gives a pressure-sensitive adhesive layer having a refractive index of from 1.50 to 1.55.

3. The pressure-sensitive adhesive as claimed in claim 1, wherein the monomer containing an aromatic ring is phenoxyethyl acrylate.

4. A pressure-sensitive adhesive member comprising a substrate and a pressure-sensitive adhesive layer comprising the pressure-sensitive adhesive as claimed in claim 1.

5. The pressure-sensitive adhesive member as claimed in claim 4, wherein the substrate is an optical member or a separator.

6. A display unit comprising an optical member adhered to an adherent through a pressure-sensitive adhesive layer comprising the pressure-sensitive adhesive as claimed in claim 1.

European Patent Office

# EUROPEAN SEARCH REPORT

Application Number
EP 02 01 4366

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 20279 A (IRIE SHINICHI ;MATSUMOTO KENJI (JP); NOJIRI YUKIO (JP); MINNESOTA) 14 May 1998 (1998-05-14)<br>* page 10, line 11 - line 17 *<br>* page 12, line 20 - page 13, line 5 *<br>* examples 1,11,14 * | 1-3 | C09J4/00<br>C08F220/18<br>C09J7/02<br>G01F1/13 |
| Y | idem. | 1-6 | |
| Y | US 6 168 682 B1 (GRIEBENOW YOLANDA ET AL) 2 January 2001 (2001-01-02)<br>* column 6, line 15 - column 7, line 22 *<br>* column 7, line 57 - column 8, line 14 *<br>* column 9, line 14 - line 32 *<br>* claim 1 * | 1-6 | |
| A | EP 0 480 626 A (CROSFIELD ELECTRONICS LTD) 15 April 1992 (1992-04-15)<br>* claims 1-5 * | 1,2,4,6 | |

TECHNICAL FIELDS SEARCHED (Int.Cl.7)
C09J
C08F

The present search report has been drawn up for all claims

| Place of search | Date of completion of the search | Examiner |
|---|---|---|
| THE HAGUE | 4 October 2002 | Bettels, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 01 4366

This annex lists the patent family membersrelating to the patent documents cited in the above-mentioned European search report.
The members are as contained in the European Patent Office EDP file on
The European Patent Office is in no way liable for these particulars which are merely given for the purpose of information.

04-10-2002

| Patent document cited in search report | | Publication date | Patent family member(s) | | | Publication date |
|---|---|---|---|---|---|---|
| WO 9820279 | A | 14-05-1998 | JP | 10142428 | A | 29-05-1998 |
| | | | CN | 1236426 | A | 24-11-1999 |
| | | | EP | 0938635 | A1 | 01-09-1999 |
| | | | WO | 9820279 | A1 | 14-05-1998 |
| | | | US | 6366727 | B1 | 02-04-2002 |
| US 6168682 | B1 | 02-01-2001 | AU | 8274298 | A | 23-08-1999 |
| | | | CN | 1291329 | T | 11-04-2001 |
| | | | EP | 1055233 | A1 | 29-11-2000 |
| | | | JP | 2002503012 | T | 29-01-2002 |
| | | | WO | 9940580 | A1 | 12-08-1999 |
| EP 0480626 | A | 15-04-1992 | DE | 69117648 | D1 | 11-04-1996 |
| | | | DE | 69117648 | T2 | 18-07-1996 |
| | | | EP | 0480626 | A1 | 15-04-1992 |
| | | | JP | 4249190 | A | 04-09-1992 |
| | | | US | 5266373 | A | 30-11-1993 |

EPO FORM P0459

For more details about this annex : see Official Journal of the European Patent Office, No. 12/82